(19) Europäisches Patentamt / European Patent Office / Office européen des brevets

(11) EP 4 553 101 B1

(12) EUROPEAN PATENT SPECIFICATION

(45) Date of publication and mention of the grant of the patent:
**08.10.2025 Bulletin 2025/41**

(21) Application number: **24171779.2**

(22) Date of filing: **23.04.2024**

(51) International Patent Classification (IPC):
***C08G 73/10*** (2006.01) ***C08K 7/18*** (2006.01)
***C09D 7/62*** (2018.01) ***C09D 179/08*** (2006.01)
***H01B 1/02*** (2006.01) ***H01B 3/30*** (2006.01)
***C08K 9/06*** (2006.01)

(52) Cooperative Patent Classification (CPC):
(C-Sets available)
**C08G 73/1071; C08G 73/1007; C09D 7/62; C09D 179/08; H01B 3/306;** C08K 2201/011
(Cont.)

# (54) A POLYMIDE VARNISH AND PREPARATION METHOD AND USE THEREOF

POLYIMIDLACK, HERSTELLUNGSVERFAHREN UND VERWENDUNG DAVON

VERNIS POLYIMIDE, SON PROCÉDÉ DE PRÉPARATION ET SON UTILISATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.11.2023 CN 202311508532**

(43) Date of publication of application:
**14.05.2025 Bulletin 2025/20**

(73) Proprietor: **Ningbo Boya Poly Advanced Materials Co., Ltd.**
**Ningbo Zhejiang 315000 (CN)**

(72) Inventors:
- **ZHANG, Pengfei**
  **Ningbo, 315000 (CN)**
- **ZHUANG, Fangdong**
  **Ningbo, 315000 (CN)**
- **JIN, Qunchao**
  **Ningbo, 315000 (CN)**

(74) Representative: **Huang, Liwei**
**Cäcilienstraße 12**
**40597 Düsseldorf (DE)**

(56) References cited:
**CN-A- 106 589 374**
**CN-A- 111 808 306**
**CN-A- 112 011 074**
**CN-A- 114 933 852**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09D 179/08, C08K 7/18;**
**C09D 179/08, C08K 9/06**

## Description

### Technical Field

The present invention belongs to the technical field of polyimide, and specifically relates to a polyimide varnish, a conductor with polyimide enamel, use of the conductor with polyimide enamel and a motor.

### Background art

With the rapid development of the industry of new energy, the requirements on motor performances are also gradually increased. In particular, in order to solve the problem for fast charging, a requirement of a high voltage of 800V is also adopted for motors. However, the production of high-voltage motors has put forward more requirements to enameled wires. It is necessary to improve the heat resistance of enameled wires, and also to improve the insulation performance of enameled wires. For improving the insulation performance, corona resistance is an important factor. The corona phenomenon means that a partial discharging causes a failure of the insulation around a coil. Its principle is that charged particles generated by partial discharging collide with the insulating material, so that the collisions lead to breaking of the organic polymer chain of the insulating material, and lead to partial thermal decomposition as the local temperature rises.

In addition, partial discharging will also generate ozone, and ozone will cause chemical damages to insulating materials. These damages will eventually result in insulation failure of electro-mechanical coils. Therefore, it is particularly important to improve the corona resistance of enameled wires.

A conventional method to improve the corona resistance of enameled wires is to add inorganic insulating particles to the insulation slurry for the insulation layer covering the conductive wire. For example, by dispersing inorganic insulating nanoparticles such as silica, alumina, titanium oxide, etc. in an insulation slurry. The addition of inorganic particles can not only effectively improve the corona resistance of the insulation slurry but also significantly improve the thermodynamic and mechanical properties of the enamel formed after curing.

A conventional method for adding inorganic particles to insulation slurry is using physical dispersion to mix inorganic nanoparticles into the insulation slurry. CN112063294A discloses a method for preparing a functional protective varnish of polyamic acid solution, a functional protective varnish of polyamic acid solution prepared by the method, a method for preparing a film using the functional protective varnish of polyamic acid solution, and use of the functional protective varnish of the polyamic acid solution in display substrates. The functional protective varnish of polyamic acid solution provided by this document can effectively improve the performances of main film in adhesion and heat resistance (for example, the thermal decomposition temperature is improved), and avoid the defect of bubbles. It is suitable for use as a substrate material for flexible displays.

However, these insulation slurries, obtained by adding inorganic nanoparticles through physical mixing, normally have a low stability, since the inorganic particles are physically dispersed in the slurry rather than dissolved. Due to the electrostatic force and van der Waals force between inorganic particles, the particles in slurry will be further agglomerated or thickened during the storage. Meanwhile, the larger the specific surface area of inorganic nanoparticles, the better the corona resistance; on the contrary, as the particle size increases, the corona resistance will decrease.

In order to reduce the occurrence of agglomeration or thickening of inorganic nanoparticles in the insulation slurry and to improve the stability of the insulation slurry in storage and production, a sol with dispersed inorganic particles may be physically mixed with an insulating resin. However, a limitation of this method is that the solvent used to disperse the inorganic sol must be special, which must not only be able to disperse the inorganic particles in the sol but also have good solubility with the insulation slurry. In addition, during the curing process, the particles will further agglomerate. Meanwhile, because the solids content of a conventional sol generally does not exceed 30% of the sol, this method of adding sol has a certain limitation in the solids content of insulating resin.

In order to uniformly disperse and stabilize the particles within the polymer chain, a silane coupling agent can react with the monomers, and then by heating siloxane and water, to generate modified silica nanoparticles in situ (High Performance Polymers, 2017,29(9) 1049-1057; Polymer 46 (2005) 6959-6967). This method can achieve good dispersion performance and make the particles have excellent stability, however, the introduction of the coupling agent will consume part of the dianhydride or diamine, and the addition of water will further reduce the storage stability of the polyamic acid slurry.

CN 111808306A discloses a polyimide film, wherein by polycondensing an aromatic diamine containing an imidazole group and a tetracarboxylic dianhydride monomer, the polyimide main chain structure thus obtained contains a benzimidazole group structure, which can be combined with the epoxy groups on the silica modified by the epoxy terminal coupling agent are cross-linked and bonded, so that the silica is uniformly dispersed in the polyimide matrix as reinforcing particles. In this method, it uses imidazole group to react with the epoxy group, thus the "imidazole group" is indispensible, besides, the silica modified by the epoxy terminal coupling agent is added for the process of imidization, so as to form polyimide.

CN 112011074A discloses a preparation method of silicone-modified polyimide film, wherein the surface-modified silica is mixed with the diamine monomer and then the dianhydride monomer is added, to form a silicone-modified polyamic acid.

CN106589374A also uses epoxy-modified silica to react with diamine monomer and dianhydride monomer, so that the silica is strongly bonded to the polymer chain and cannot be separated/detached from the polymer chain.

CN114933852A also uses epoxy-modified silica to react with diamine monomer, so that the silica is strongly bonded to the polymer chain and cannot be separated/detached from the polymer chain.

Therefore, in order to solve the above technical problems, there is an urgent need to develop a polyimide varnish which can have an excellent storage stability before curing and can maintain a uniform dispersion after curing.

## Summary of Invention

In view of the shortcomings of the existing technology, the purpose of the present invention is to provide a polyimide varnish and its preparation method and use. The raw materials for preparing the polyimide varnish comprises aromatic dianhydride, aromatic diamine and silica nanoparticles modified by epoxy silane. By a combined use of the above three raw materials, the obtained polyimide varnish has excellent storage stability before curing, and after curing, the silica nanoparticles can still be evenly dispersed in the film, thereby making the enameled wire have excellent and long-lasting corona resistance.

The present invention is defined as in the appended claims.

In a first aspect, the present invention provides a polyimide varnish, wherein the polyimide varnish is prepared by using raw materials which comprises aromatic dianhydride, aromatic diamine, and silica nanoparticles modified by epoxy silane.

In the present invention, the raw materials for preparing the polyimide varnish comprise aromatic dianhydride, aromatic diamine, and silica nanoparticles modified by epoxy silane. To be specific, the polyimide varnish is obtained by using the three raw materials for reaction.

By using silica nanoparticles modified by epoxy silanes in the raw materials of preparation, the epoxy group can undergo a ring-opening esterification reaction with the polyamic acid obtained from the reaction of aromatic dianhydride and aromatic diamine. Thereby, by using this kind of chemical bond, silica nanoparticles are successfully grafted into the molecular chain of polyamic acid. Due to the chemical bond, it effectively improves the storage stability and dispersion uniformity of the finally-obtained polyimide varnish. Besides, after the polyimide varnish is applied as a coating on the surface of the substrate, and cured at high temperature, it can achieve imidization and form a polyimide enamel, wherein the silica nanoparticles are released (separated) (from the polymer chain) and evenly dispersed in the polyimide enamel. Thereby, the enameled wire obtained by using the polyimide varnish of the present invention can have excellent and long-lasting corona resistance.

Prefearably, the aromatic dianhydride comprises any one or a combination of at least two selected from the following: 2,2',3,3'-biphenyltetracarboxylic dianhydride, 3,3',4,4'-biphenyltetracarboxylic dianhydride, 4,4'-oxydiphthalic anhydride, 9,9-bis(3,4-dicarboxyphenyl)fluorene dianhydride, 5-Isobenzofurancarboxylic acid , bis[(3,4-dicarboxylic anhydride)phenyl]terephthalate, 3,3',4,4'-diphenylsulfone tetracarboxylic dianhydride, p-phenylene bis(trimellitate) dianhydride, 4,4'-(p-phenylenedioxy)bis[phthalic anhydride] (HQDA), pyromellitic dianhydride, 2,2'-bis(3,4-dicarboxyphenyl)hexafluorpropan dianhydrid, 2,2-bis(4-(3,4-dicarboxyphenoxy)phenyl)hexafluoropropane dianhydride, 2,2-bis(4-(3,4-dicarboxylbenzoyloxy)phenyl)hexafluoropropane dianhydride, or 2,2'-bis(trifluoromethyl)-4,4'-bis(3,4-dicarboxyphenoxy)biphenyl dianhydride.

More preferably, the aromatic dianhydride comprises any one or a combination of at least two selected from pyromellitic dianhydride, 3,3',4,4'-biphenyltetracarboxylic dianhydride, 2,2'-bis(3,4-dicarboxyphenyl)hexafluorpropan dianhydrid, or 4,4'-(p-phenylenedioxy)bis[phthalic anhydride] (HQDA).

The aromatic diamine comprises any one or a combination of at least two selected from the following: p-phenylenediamine, m-phenylenediamine, 4,4'-diaminodiphenylether, 2,2'-bis(trifluoromethyl)-4,4'-biphenyldiamine, 4,4'-diaminobenzanilide, 2,2-bis[4-(4-aminophenoxy)phenyl]propane, 4,4'-diaminodiphenyl sulfone, 2,2-bis(4-hydroxy-3-aminophenyl)propane, 4,4'-bis(3-aminophenoxy)diphenylsulfone, 2,2-dimethyl-4,4-diaminobiphenyl (m-tolidine), 4,4'-diaminobiphenyl (benzidine), or 9,9-bis(4-aminophenyl)fluorene.

A molar ratio of the aromatic dianhydride to aromatic diamine is (0.95 to 1.05) : 1, for example, 0.97:1, 0.98:1, 0.99:1, 1:1, 1.02:1 or 1.04:1, etc.

When a total mass of all the solid components in the polyimide varnish is taken as 100%, the mass of the silica nanoparticles modified by epoxy silane is 1-40%, such as 5%, 10%, 15%, 20%, 25%, 30% or 35%, etc. and more preferably 5-30%, .

When a total mass of all the solid components in the polyimide varnish is taken as 100%, the mass of the silica nanoparticles modified by epoxy silane is 1-40%. When the addition amount of the silica nanoparticles modified by epoxy silane is too high, it may lead to poor flexibility of the polyimide enamel formed by the polyimide varnish. When the addition

amount of the silica nanoparticles modified by epoxy silane is too low, it may lead to poor corona resistance of the polyimide enamel formed by the polyimide varnish, making it difficult to meet the requirements in corona-resistant duration.

Raw materials for preparing the silica nanoparticles modified by epoxy silane comprise silica nanoparticles and a coupling agent of epoxy silane. By a coupling/grating reaction between the silica nanoparticles and the coupling agent of epoxy silane, we obtain the the silica nanoparticles modified by epoxy silane.

The median particle size D50 of the silica nanoparticles used in our invention is 10 to 300 nm, for example, 20 nm, 40 nm, 60 nm, 80 nm, 90 nm, 100 nm, 110 nm, 130 nm, 160 nm, 190 nm, 220 nm, 250 nm or 280 nm, etc., more preferably 10 to 110 nm, and more preferably 10 to 80 nm. In the present invention, the median particle size D50 is determined by laser diffraction method, and thus the default D50 means the median for a volume distribution (D50 refers to Dv50 without including the v).

Besides, in order to improve the uniformity, the size dispersion of the nanoparticles is preferred to be relatively narrow. In the present invention, the Coefficient of Variance (C.V.) in particle size is no more than 10%.

The silica nanoparticles used as raw materials in the present invention are preferably hydrophilic silica nanoparticles. By some known methods, the obtained silica nanoparticles may have hydroxyl groups on the surface of particles, and thus be hydrophilic. Hydrophilic silica nanoparticles can be easily dispersed in aqueous solution, so that the coupling/grafting reaction with the coupling agent of epoxy silane can be easily conducted in aqueous solution.

When the mass of the silica nanoparticles is taken as 100%, the mass of the coupling agent of epoxy silane is 1 to 20%, for example, 2%, 4%, 6%, 8%, 10%, 12%, 14%, 16% or 18%, etc., more preferably 5 to 15%.

The coupling agent of epoxy silane in the present invention refers to an epoxy silane capable of being coupled with silica. On one side, it has an epoxy group, and on the other side, it has a group capable of being coupled with silica, which is preferred to be a methoxy or ethoxy group linked to silicon atom.

Preferably, the coupling agent of epoxy silane comprises any one or a combination of at least two selected from compounds as represented by the following formula I, formula II or formula III,

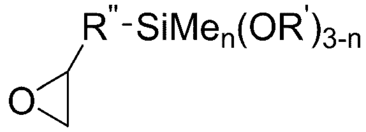

Formula I;

in the formula I, R' is selected from -Me or -Et, R" is selected from

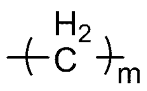

,

wherein n = 0, 1 or 2, m = 1, 2 or 3;

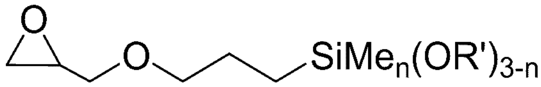

Formula II;

in the formula II, R' is selected from -Me or -Et, n = 0, 1 or 2;

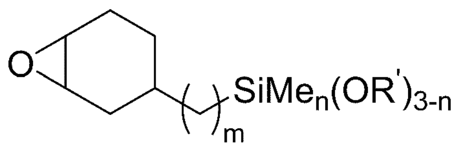

Formula III;

in the formula III, R' is selected from -Me or -Et, n = 0, 1 or 2, m = 0, 1 or 2;

More preferably, the coupling agent of epoxy silane comprises any one or a combination of at least two selected from γ-glycidoxypropyltrimethoxysilane, (3-aminopropyl)triethoxysilane, or β-(3,4-epoxycyclohexyl) ethyl trimethoxy silane.

Preferably, the raw materials for preparing the polyimide varnish also comprises a polar solvent.

The polar solvent is preferably not water, and is more preferably aprotic polar solvent.

This polar solvent can be used for the reaction between aromatic dianhydride and aromatic diamine. And/or, the polar solvent can be used to disperse the silica nanoparticles modified by epoxy silane. For example, the silica nanoparticles modified by epoxy silane (which are obtained after coupling/grafting reaction between the silica nanoparticles and the coupling agent of epoxy silane in aqueous solution) may be centrifuged and dried, and then redispersed in the polar solvent which is not water, and then be used in the subsequent reaction (the ring-opening esterification reaction between the epoxy group and the polyamic acid).

Preferably, the polar solvent includes any one or a combination of at least two selected from N-methyl-2-pyrrolidone, N,N-dimethylformamide, N,N-dimethylacetamide, γ-butyrolactone, propylene glycol monomethyl ether, cyclopentanone, cyclohexanone, ethyl acetate, toluene, or methyl ethyl ketone; more preferably the polar solvent includes N-methyl-2-pyrrolidone, N,N-dimethylformamide and/or N,N-dimethylacetamide.

Preferably, the solids content in the polyimide varnish is 10-30 wt%, for example, 12%, 14%, 16%, 18%, 20%, 22%, 24%, 26% or 28%, etc.

The polyimide varnish is prepared by following steps:

(1) aromatic dianhydride and aromatic diamine react in a polar solvent, to obtain polyamic acid;

(2) the polyamic acid obtained from step (1) reacts with the silica nanoparticles modified by epoxy silane, so as to obtain the polyimide varnish.

It is preferred to use aprotic polar solvent in both step (1) and step (2), such as those listed above, particularly preferably N,N-dimethylformamide and/or N,N-dimethylacetamide.

A reaction formula of step (1) of the above-mentioned preparation method may be illustrated as follows:

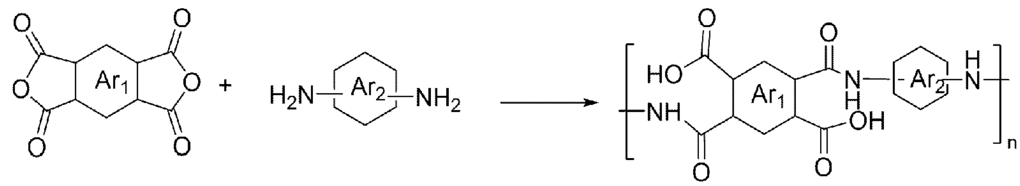

;

In the step (2) of the above-mentioned preparation method, an epoxy group (linked with the silica nanoparticles) and a carboxyl group of the polyamic acid (part of the carboxyl groups in the polyamic acid) undergo a ring-opening esterification reaction. In the ring-opening esterification reaction, the ring of the epoxy group is opened and the carboxyl group loses hydrogen, finally forming an ester alcohol.

The reaction formula of step (2) may be illustrated as follows:

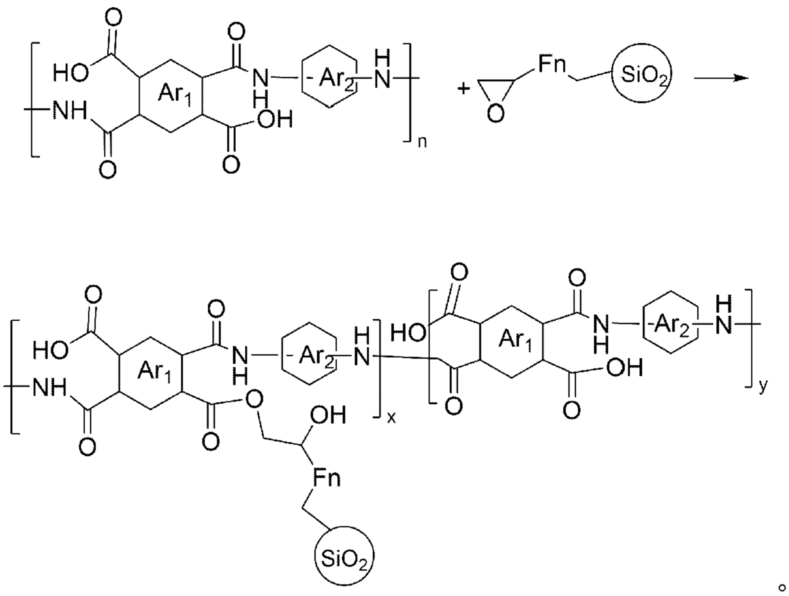

From the above content, it can be seen that the polyimide varnish obtained by the preparation method of the present invention is a polyamic acid material containing silica nanoparticles. That is to say, the polyimide varnish provided by the invention is essentially a material of polyamic acid, before the coating is performed.

The reason why it is called "polyimide varnish" is that after the above-mentioned polyamic acid material is applied as a coating on the surface of a substrate and heated and cured, the polyamic acid undergoes imidization, which forms polyimide. Meanwhile, in the present invention, during the heating and curing, the silica nanoparticles are separated and dispersed, so that the enamel covering the surface of the substrate has excellent corona resistance.

The above-mentioned reaction of the imidization and removal of silica nanoparticles can be shown as the following reaction formula:

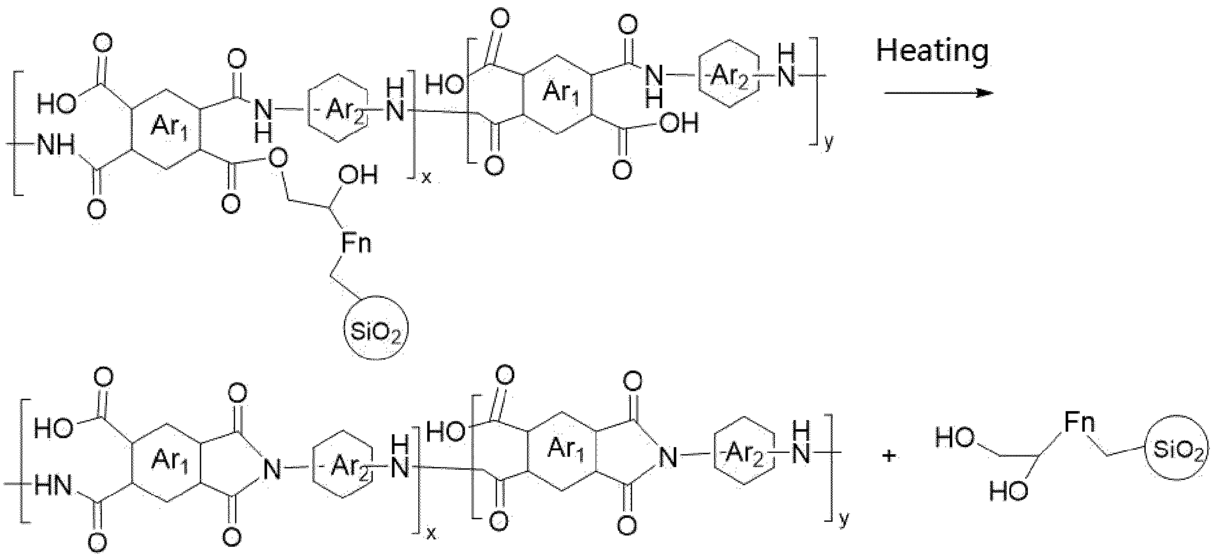


Preferably, the reaction in the step (2) is performed at a temperature of 30-80°C, for example, 35°C, 40°C, 45°C, 50°C, 55°C, 60°C, 65°C, 70°C or 75°C, etc., more preferably 40-60°C.

In a second aspect, the present invention provides a conductor with polyimide enamel, comprising a conductor, and a polyimide enamel outside the conductor, wherein the polyimide enamel is obtained after curing the polyimide varnish of the present invention. For example, after curing, the polyimide enamel is adhered to the outside of the conductor or adhered outside the conductor.

As above, the conductor with polyimide enamel, provided in the present invention, comprises a conductor, and a polyimide enamel outside the conductor. As an example, the polyimide varnish of the present invention is applied as a coating on the outside of the wire, and heated and cured, and the obtained enamel can have excellent corona resistance

effect. The polyimide varnish of the present invention can be used alone or in combination with other varnish material(s). For example, the polyimide varnish provided by the present invention can be used simultaneously (in combination with) with traditional/normal polyamide-imide varnish, polyesterimide varnish or polyimide varnish.

For example, the conductor comprises a conductive wire, like a copper wire.

Preferably, the curing is performed at a temperature of not lower than 300°C, for example, 320°C, 340°C, 360°C, 380°C, 400°C, 420°C, 440°C, 460°C, 480°C or 500°C, etc.

Preferably, the cured enamel has a thickness of more than 50 μm.

In a third respect, the present invention provides a use of the conductor with polyimide enamel of the present invention in a motor, for example, use for a winding coil in a motor.

In a fourth respect, the present invention provides a motor, comprising the conductor with polyimide enamel according to the present invention.

Compared to technology in prior art, the present invention has the following beneficial effects.

(1) In the present invention, the raw materials for preparing the polyimide varnish comprises aromatic dianhydride, aromatic diamine and silica nanoparticles modified by epoxy silane. By a combined use of the above three raw materials, the obtained polyimide varnish has excellent storage stability and uniform dispersion before curing, and after curing, the silica nanoparticles can still be evenly dispersed in the enamel, thereby making the enameled wire, which is produced by using the polyimide varnish provided by the present invention, have excellent and long-lasting corona resistance, and be suitable for use in high-voltage motors.

(2) To be specific, the enameled wire produced by using the polyimide varnish in the present invention can form a uniform enamel film after high-temperature curing. When the thickness of the corona-resistant enamel film reaches 50 μm, and a voltage of 1500 Vp is applied to the film of the enameled wire at a frequency of 50 Hz at an ambient temperature of 155°C, the corona-resistant time can reach more than 100 hours.

## Detailed Embodiments

The technical solution of the present invention will be further described below by detailed embodiments. Those skilled in the art should understand that the embodiments are only used for helping to understand the present invention and should not be regarded as a limitation to the present invention.

The solids content and the viscosity involved in the embodiments of the present invention are tested by the following methods.

(1) Solids content: taking an plate made of aluminum foil wherein the plate has a diameter of 60 mm, and weighing its weight to be m0; taking a 1±0.1g varnish sample and placing it in the aluminum plate and weighing the weight of the aluminum plate plus varnish (m1); placing the aluminum plate containing varnish in a blast oven at 180±5°C, for 1 hour, and then taking out and weighing the mass of the aluminum plate containing varnish (m2);

$$\text{Solids Content} = (m2\text{-}m0)/(m1\text{-}m0)\times 100\%;$$

(2) Viscosity: Cone & Plate Viscometer (manufactured by American Brookfield) is used to test the viscosity of the varnish at 25°C.

The hydrophilic silica nanoparticles used in the following examples are commercially available products of fumed silica provided by Hubei Huifu Nanomaterials Co., Ltd.

### Preparation Example 1

Silica nanoparticles modified by epoxy silane, wherein the preparation method includes the following steps:
Dissolving γ-glycidoxypropyltrimethoxysilane in aqueous ethanol solution, to obtain a 2 wt% solution; then mechanically stirring and dispersing for 10 minutes, adjusting the pH to 6, and adding hydrophilic silica nanoparticles (D50 is 20 nm, the mass ratio of hydrophilic silica nanoparticles to γ-glycidoxypropyltrimethoxysilane is 5:0.5) at room temperature; after mixing, using ultrasonic water bath to perform dispersion treatment for 30 minutes, and then heating to 50°C for coupling and grafting reaction; after reaction for 12 hours, centrifuging and drying, dispersing the modified silica into NMP (N-methyl-2-pyrrolidone), so as to obtain a dispersion of silica nanoparticle modified by epoxy silane, with a solids content of 20%.

**Preparation Example 2**

Silica nanoparticles modified by epoxy silane, wherein the preparation method differs from the Preparation Example 1 only in that the (hydrophilic) silica nanoparticles as raw materials has a D50 of 80 nm. The other materials, dosages and preparation methods are the same as those in Preparation Example 1.

**Preparation Example 3**

Silica nanoparticles modified by epoxy silane, wherein the preparation method differs from the Preparation Example 1 only in that the (hydrophilic) silica nanoparticles as raw materials has a D50 of 150 nm. The other materials, dosages and preparation methods are the same as those in Preparation Example 1.

**Preparation Example 4**

Silica nanoparticles modified by epoxy silane, wherein the preparation method differs from the Preparation Example 1 only in that γ-glycidoxypropyltrimethoxysilane is replaced by (3-aminopropyl)triethoxysilane. The other materials, dosages and preparation methods are the same as those in Preparation Example 1.

**Preparation Example 5**

Silica nanoparticles modified by epoxy silane, wherein the preparation method differs from the Preparation Example 1 only in thatγ-glycidoxypropyltrimethoxysilane is replaced by β-(3,4-epoxycyclohexyl) ethyl trimethoxy silane. The other materials, dosages and preparation methods are the same as those in Preparation Example 1.

**Preparation Example 6**

Silica nanoparticles modified by epoxy silane, wherein the preparation method differs from the Preparation Example 1 only in that the (hydrophilic) silica nanoparticles as raw materials has a D50 of 350 nm. The other materials, dosages and preparation methods are the same as those in Preparation Example 1.

**Example 1**

A polyimide varnish, the preparation method of which includes the following steps:

(1) Adding N,N-dimethylacetamide (DMAc, 24.39 kg) into a 50 L reactor, then adding 4,4'-diaminodiphenyl ether (ODA, 5.006 kg) into the reactor, then lowering the temperature of the reactor to 0°C and adding pyromellitic dianhydride (PMDA, 5.453 kg), maintaining the reaction at 0°C for 20 h, and finally raising the system temperature to room temperature and reacting for 2 h, so as to obtain polyamic acid;

(2) Mixing the dispersion of silica nanoparticles modified by epoxy silane (5.226 kg) as obtained from the Preparation Example 1 with the polyamic acid as obtained from the step (1), and adding DMAc (5.941 kg) for dilution, then stirring and reacting at 40°C for 2 hours, so as to obtain a polyimide varnish with a solids content of 25% and a viscosity of 17950 cp.

**Example 2**

A polyimide varnish, the preparation method of which includes the following steps:

(1) Adding N,N-dimethylacetamide (DMAc, 24.39 kg) into a 50 L reactor, then adding 4,4'-diaminodiphenyl ether (ODA, 5.006 kg) into the reactor, then lowering the temperature of the reactor to 0°C and adding pyromellitic dianhydride (PMDA, 5.453 kg), maintaining the reaction at 0°C for 20 h, and finally raising the system temperature to room temperature and reacting for 2 h, so as to obtain polyamic acid;

(2) Mixing the dispersion of silica nanoparticles modified by epoxy silane (2.613 kg) as obtained from the Preparation Example 1 with the polyamic acid as obtained from the step (1), and adding DMAc (6.656 kg) for dilution, then stirring and reacting at 40°C for 2 hours, so as to obtain a polyimide varnish with a solids content of 25% and a viscosity of 2140 cp.

**Example 3**

A polyimide varnish, the preparation method of which includes the following steps:

(1) Adding N,N-dimethylacetamide (DMAc, 24.39 kg) into a 50 L reactor, then adding 4,4'-diaminodiphenyl ether (ODA, 5.006 kg) into the reactor, then lowering the temperature of the reactor to 0°C and adding pyromellitic dianhydride (PMDA, 5.453 kg), maintaining the reaction at 0°C for 20 h, and finally raising the system temperature to room temperature and reacting for 2 h, so as to obtain polyamic acid;

(2) Mixing the dispersion of silica nanoparticles modified by epoxy silane (7.84 kg) as obtained from the Preparation Example 1 with the polyamic acid as obtained from the step (1), and adding DMAc (5.364 kg) for dilution, then stirring and reacting at 40°C for 2 hours, so as to obtain a polyimide varnish with a solids content of 25% and a viscosity of 1650 cp.

**Example 4**

A polyimide varnish, which differs from the Example 1 in that the dispersion of silica nanoparticles modified by epoxy silane as obtained from the Preparation Example 1 is replaced by the dispersion of silica nanoparticles modified by epoxy silane as obtained from the Preparation Example 2, so as to obtain a polyimide varnish with a viscosity of 18650 cp. The other materials, dosages and preparation methods are the same as those in Example 1.

**Example 5**

A polyimide varnish, which differs from the Example 1 in that the dispersion of silica nanoparticles modified by epoxy silane as obtained from the Preparation Example 1 is replaced by the dispersion of silica nanoparticles modified by epoxy silane as obtained from the Preparation Example 3, so as to obtain a polyimide varnish with a viscosity of 19640 cp. The other materials, dosages and preparation methods are the same as those in Example 1.

**Example 6**

A polyimide varnish, which differs from the Example 1 in that the dispersion of silica nanoparticles modified by epoxy silane as obtained from the Preparation Example 1 is replaced by the dispersion of silica nanoparticles modified by epoxy silane as obtained from the Preparation Example 4, so as to obtain a polyimide varnish with a viscosity of 22310 cp. The other materials, dosages and preparation methods are the same as those in Example 1.

**Example 7**

A polyimide varnish, which differs from the Example 1 in that the dispersion of silica nanoparticles modified by epoxy silane as obtained from the Preparation Example 1 is replaced by the dispersion of silica nanoparticles modified by epoxy silane as obtained from the Preparation Example 5, so as to obtain a polyimide varnish with a viscosity of 19840 cp. The other materials, dosages and preparation methods are the same as those in Example 1.

**Example 8**

A polyimide varnish, which differs from the Example 1 in that the dispersion of silica nanoparticles modified by epoxy silane as obtained from the Preparation Example 1 is replaced by the dispersion of silica nanoparticles modified by epoxy silane as obtained from the Preparation Example 6, so as to obtain a polyimide varnish with a viscosity of 16680 cp. The other materials, dosages and preparation methods are the same as those in Example 1.

**Example 9**

A polyimide varnish, which differs from the Example 1 in that the addition amount of the dispersion of silica nanoparticles modified by epoxy silane as obtained from the Preparation Example 1 is 1.226 kg, and the addition amount of DMAc is 1.394 kg, so as to obtain a polyimide varnish with a viscosity of 17550 cp. The other materials, dosages and preparation methods are the same as those in Example 1.

### Example 10

A polyimide varnish, which differs from the Example 1 in that the addition amount of the dispersion of silica nanoparticles modified by epoxy silane as obtained from the Preparation Example 1 is 40.226 kg, so as to obtain a polyimide varnish with a viscosity of 24600 cp. The other materials, dosages and preparation methods are the same as those in Example 1.

### Use Example 1

An enameled wire, comprising a copper wire with a diameter of 284 mm. The copper wire is coated with a commercially available polyimide varnish (BOYA PI 30UN, which does not contain nanoparticles) as a primer coating and then subsequently coated with the polyimide varnish provided in Example 1 as a finish coating, so that a total thickness of coating is 75 μm.

In this Use Example, the preparation process of enameled wire includes: using H5000-1T-20D enameling machine (manufactured by TAIYO) as the wire coating equipment to coat the outside of the copper wire.

The parameters in the coating process are the following: temperature at the oven entrance is 330°C; temperature at the middle of the oven is 370°C; temperature at the oven outlet is 400°C; production specification is 0.25 mm; speed is 12 m/min; number of coating passes: 1 pass of coating the commercially available polyimide varnish +16 passes of coating polyimide varnish provided by Example 1.

### Use Example 2-10

An enameled wire, which differs from Use Example 1 in that the polyimide varnish provided by Example 1 is replaced by the polyimide varnish provided by Examples 2 to 10 respectively. The other materials and producing processes are the same as those in Use Example 1.

### Comparative Use Example 1

An enameled wire, which differs from Use Example 1 in that the polyimide varnish provided by Example 1 is replaced by a commercially available polyimide varnish (BOYA PI 30UN, which does not contain nanoparticles). The other materials and producing processes are the same as those in Use Example 1.

### Comparative Use Example 2

An enameled wire, which differs from Use Example 1 in that the polyimide varnish provided by Example 1 is replaced by a mixture obtained from physically mixing the commercially available polyimide varnish (BOYA PI 30UN) with 80 nm silica nanoparticles (the material and the dosage are similar to our Preparation Example 2), wherein no coupling agent of epoxy silane is used. The other materials and producing processes are the same as those in Use Example 1.

Performance Testing:

(1) Bending performance: it is tested according to the method provided by the national standard "GB/T 4074.21-83";

(2) Dielectric loss: it is tested according to the method provided by the national standard "GB/T 4074.21";

(3) Softening breakdown performance: the softening breakdown test is performed according to the method provided by the national standard "GB/T 4074.21-2018", wherein the test conditions are 400°C, 2 min;

(4) Corona resistance performance: At an ambient temperature of 155°C, a voltage of 1500 Vp is applied to the film of the enameled wire at a frequency of 50 Hz. The time when the film breaks down and causes a short circuit is the corona-resistant time, i.e. the time resistant to corona damage.

According to the above testing methods, the enameled wires provided by the Use Examples 1 to 10 and the Comparative Use Examples 1 to 2 are tested. The test results are shown in Table 1.

Table 1

| | Bending performance | Dielectric loss (°C) | Softening breakdown performance | Time resistant to corona /h |
|---|---|---|---|---|
| Use Example 1 | Qualified | 336 | Qualified | 187 |
| Use Example 2 | Qualified | 330 | Qualified | 101 |
| Use Example 3 | Qualified | 342 | Qualified | 201 |
| Use Example 4 | Qualified | 332 | Qualified | 145 |
| Use Example 5 | Qualified | 335 | Qualified | 101 |
| Use Example 6 | Qualified | 309 | Qualified | 171 |
| Use Example 7 | Qualified | 331 | Qualified | 175 |
| Use Example 8 | Qualified | 323 | Qualified | 80 |
| Use Example 9 | Qualified | 323 | Qualified | 106 |
| Use Example 10 | Unqualified | 345 | Qualified | 268 |
| Comparative Use Example 1 | Qualified | 329 | Qualified | 3 |
| Comparative Use Example 2 | Qualified | 311 | Qualified | 51 |

According to the data in Table 1, it can be seen that:

(1) The enameled wires provided in Use Examples 1 to 7 are all "Qualified" in the bending performance test, having a dielectric loss temperature of 309-342°C, and are all "Qualified" in the softening breakdown performance, and the corona-resistant time can be as high as 101-201 h;

(2) By comparing the Comparative Use Examples 1 to 2 with the Use Example 1, it can be found that the enameled wires produced by the commercially available polyimide varnish (BOYA PI 30UN) and the conventional commercial varnish 1 have shorter corona-resistant time, indicating that the commercially available polyimide varnish (BOYA PI 30UN) and the conventional commercial varnish 1 have poor corona resistance;

(3) By comparing the Use Examples 8-9 with the Use Example 1, it can be found that the enameled wires provided by the Use Examples 8-9 also have shorter corona-resistant time, indicating that when the particle size of the silica particles is too large or the addition amount of the silica particles is relatively low, the corona resistance of the polyimide varnish is also reduced.

(4) By comparing the Use Example 10 and the Use Example 1, it can be found that although the enameled wire provided by Use Example 10 has a longer corona-resistant time, its bending performance test is not qualified, indicating that when the addition amount of silica particles is too high, the flexibility of the polyimide varnish after film formation will decrease.

(5) Finally, by comparing the data of the Use Examples 1-3, it can be found that within a specific range of addition amount, as the addition amount of silica particles increases, the corona resistance of the polyimide varnish after film formation will also increase.

## Claims

**1.** A polyimide varnish, wherein raw materials for preparing the polyimide varnish comprise aromatic dianhydride, aromatic diamine, and silica nanoparticles modified by epoxy silane;

wherein a molar ratio of the aromatic dianhydride to aromatic diamine is 0.95 to 1.05,
wherein, when a total mass of all the solid components in the polyimide varnish is taken as 100%, the mass of the silica nanoparticles modified by epoxy silane is 1-40%;
wherein, raw materials for preparing the silica nanoparticles modified by epoxy silane comprise silica nanoparticles and a coupling agent of epoxy silane;

wherein the median particle size D50 of the silica nanoparticles is 10 to 300 nm, the median particle size D50 is volume distribution Dv50, determined by laser diffraction method, and Coefficient of Variance (C.V.) in particle size is 10% or less;
when the mass of the silica nanoparticles is taken as 100%, the mass of the coupling agent of epoxy silane is 1 to 20%;
wherein the aromatic diamine comprises any one or a combination of at least two selected from the following: p-phenylenediamine, m-phenylenediamine, 4,4'-diaminodiphenylether, 2,2'-bis(trifluoromethyl)-4,4'-biphenyldiamine, 4,4'-diaminobenzanilide, 2,2-bis[4-(4-aminophenoxy)phenyl]propane, 4,4'-diaminodiphenyl sulfone, 2,2-bis(4-hydroxy-3-aminophenyl)propane, 4,4'-bis(3-aminophenoxy)diphenylsulfone, 2,2-dimethyl-4,4-diaminobiphenyl (m-tolidine), 4,4'-diaminobiphenyl (benzidine), or 9,9-bis(4-aminophenyl)fluorene;
wherein the polyimide varnish is prepared by following steps:

step 1, aromatic dianhydride and aromatic diamine react in a polar solvent, to obtain polyamic acid;
step 2, the polyamic acid obtained from step 1 reacts with the silica nanoparticles modified by epoxy silane, so as to obtain the polyimide varnish

**2.** The polyimide varnish according to the claim 1, wherein the aromatic dianhydride comprises any one or a combination of at least two selected from the following:

2,2',3,3'-biphenyltetracarboxylic dianhydride, 3,3',4,4'-biphenyltetracarboxylic dianhydride, 4,4'-oxydiphthalic anhydride, 9,9-bis(3,4-dicarboxyphenyl)fluorene dianhydride, 5-Isobenzofurancarboxylic acid , bis[(3,4-dicarboxylic anhydride)phenyl]terephthalate, 3,3',4,4'-diphenylsulfone tetracarboxylic dianhydride, p-phenylene bis(trimellitate) dianhydride, 4,4'-(p-phenylenedioxy)bis[phthalic anhydride] (HQDA), pyromellitic dianhydride, 2,2'-bis(3,4-dicarboxyphenyl)hexafluorpropan dianhydrid,
2,2-bis(4-(3,4 -dicarboxyphenoxy)phenyl)hexafluoropropane dianhydride, 2,2-bis(4-(3,4-dicarboxylbenzoyloxy)phenyl)hexafluoropropane dianhydride, or 2,2'-bis(trifluoromethyl)-4,4'-bis(3,4-dicarboxyphenoxy)biphenyl dianhydride;
more preferably, the aromatic dianhydride comprises any one or a combination of at least two selected from pyromellitic dianhydride, 3,3',4,4'-biphenyltetracarboxylic dianhydride, 2,2'-bis(3,4-dicarboxyphenyl)hexafluorpropan dianhydrid, or 4,4'-(p-phenylenedioxy)bis[phthalic anhydride] (HQDA).

**3.** The polyimide varnish according to the claim 1 or 2, wherein, when a total mass of all the solid components in the polyimide varnish is taken as 100%, the mass of the silica nanoparticles modified by epoxy silane is 5-30%, .

**4.** The polyimide varnish according to any of the claims 1 to 3, wherein the median particle size D50 of the silica nanoparticles is 10 to 110 nm, and more preferably 10 to 80 nm;

preferably, the silica nanoparticles are hydrophilic silica nanoparticles;
preferably, when the mass of the silica nanoparticles is taken as 100%, the mass of the coupling agent of epoxy silane is 5 to 15%;
preferably, the coupling agent of epoxy silane comprises any one or a combination of at least two selected from compounds as represented by the following formula I, formula II or formula III,

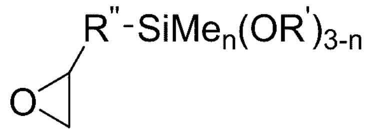

Formula I;

in the formula I, R' is selected from -Me or -Et, R" is selected from

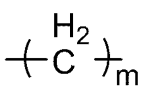,

wherein n = 0, 1 or 2, m = 1, 2 or 3;

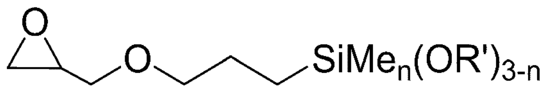

Formula II;

in the formula II, R' is selected from -Me or -Et, n = 0, 1 or 2;

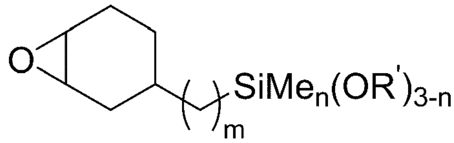

Formula III;

in the formula III, R' is selected from -Me or -Et, n = 0, 1 or 2, m = 0, 1 or 2;
more preferably, the coupling agent of epoxy silane comprises any one or a combination of at least two selected from γ-glycidoxypropyltrimethoxysilane, (3-aminopropyl)triethoxysilane, or β-(3,4-epoxycyclohexyl) ethyl trimethoxy silane.

**5.** The polyimide varnish according to any of the claims 1 to 4, wherein the raw materials for preparing the polyimide varnish also comprises a polar solvent;

preferably, the polar solvent comprises any one or a combination of at least two selected from N-methyl-2-pyrrolidone, N,N-dimethylformamide, N,N-dimethylacetamide, γ-butyrolactone, propylene glycol monomethyl ether, cyclopentanone, cyclohexanone, ethyl acetate, toluene, or methyl ethyl ketone;
more preferably the polar solvent is N,N-dimethylformamide and/or N,N-dimethylacetamide;
preferably, the solids content in the polyimide varnish is 10-30 wt%.

**6.** A conductor with polyimide enamel, comprising a conductor, and a polyimide enamel outside the conductor, wherein the polyimide enamel is obtained after curing the polyimide varnish according to any of claims 1 to 5.

**7.** The conductor with polyimide enamel according to claim 6, wherein the curing is performed at a temperature of not lower than 300°C.

**8.** Use of the conductor with polyimide enamel according to claim 6 or 7 in a motor.

**9.** A motor, comprising the conductor with polyimide enamel according to claim 6 or 7.

**Patentansprüche**

**1.** Polyimidlack, wobei Rohmaterialien zum Herstellen des Polyimidlacks aromatisches Dianhydrid, aromatisches Diamin und durch Epoxidsilan modifizierte Siliciumdioxid-Nanopartikel umfassen;

wobei ein Molverhältnis des aromatischen Dianhydrids zu aromatischem Diamin 0,95 bis 1,05 beträgt,
wobei, wenn eine Gesamtmasse von all den festen Komponenten in dem Polyimidlack als 100 % angenommen wird, die Masse der durch Epoxidsilan modifizierten Siliciumdioxid-Nanopartikel 1-40 % beträgt;
wobei Rohmaterialien zum Herstellen der durch Epoxidsilan modifizierten Siliciumdioxid-Nanopartikel Siliciumdioxid-Nanopartikel und einen Haftvermittler von Epoxidsilan umfassen;
wobei die mediane Partikelgröße D50 der Siliciumdioxid-Nanopartikel 10 bis 300 nm beträgt, die mediane Partikelgröße D50 Volumenverteilung Dv50 ist, bestimmt durch ein Laserbeugungsverfahren, und der Varianzkoeffizient (C.V.) der Partikelgröße 10 % oder weniger beträgt;
wenn die Masse der Siliciumdioxid-Nanopartikel als 100 % angenommen wird, die Masse des Haftvermittlers von Epoxidsilan 1 bis 20 % beträgt;
wobei das aromatische Diamin ein beliebiges oder eine Kombination von mindestens zwei ausgewählt aus den

Folgenden umfasst: p-Phenylendiamin, m-Phenylendiamin, 4,4'-Diaminodiphenylether, 2,2'-Bis(trifluormethyl)-4,4'-biphenyldiamin, 4,4'-Diaminobenzanilid, 2,2-Bis[4-(4-aminophenoxy)phenyl]propan, 4,4'-Diaminodiphenylsulfon, 2,2-Bis(4-hydroxy-3-aminophenyl)propan, 4,4'-Bis(3-aminophenoxy)diphenylsulfon, 2,2-Dimethyl-4,4-diaminobiphenyl (m-Tolidin), 4,4'-Diaminobiphenyl (Benzidin) oder 9,9-Bis(4-aminophenyl)fluoren; wobei der Polyimidlack durch folgende Schritte hergestellt wird:

Schritt 1, aromatisches Dianhydrid und aromatisches Diamin reagieren in einem polaren Lösungsmittel, um Polyamidsäure zu erlangen;
Schritt 2, die aus Schritt 1 erlangte Polyamidsäure reagiert mit den durch Epoxidsilan modifizierten Siliciumdioxid-Nanopartikeln, um den Polyimidlack zu erlangen.

**2.** Polyimidlack nach Anspruch 1, wobei das aromatische Dianhydrid ein beliebiges oder eine Kombination von mindestens zwei ausgewählt aus den Folgenden umfasst: 2,2',3,3'-Biphenyltetracarbonsäuredianhydrid, 3,3',4,4'-Biphenyltetracarbonsäuredianhydrid, 4,4'-Oxydiphthalsäureanhydrid, 9,9-Bis(3,4-dicarboxyphenyl)fluorendianhydrid, 5-Isobenzofurancarbonsäure, Bis[(3,4-dicarbonsäureanhydrid)phenyl]terephthalat, 3,3',4,4'-Diphenylsulfontetracarbonsäuredianhydrid, p-Phenylen-bis(trimellitat)dianhydrid, 4,4'-(p-Phenylendioxy)bis[phthalsäureanhydrid] (HQDA), Pyromellitsäuredianhydrid, 2,2'-Bis(3,4-dicarboxyphenyl)hexafluorpropandianhydrid, 2,2-Bis(4-(3,4-dicarboxyphenoxy)phenyl)hexafluorpropandianhydrid, 2,2-Bis(4-(3,4-dicarboxylbenzoyloxy)phenyl)hexafluorpropandianhydrid oder 2,2'-Bis(trifluormethyl)-4,4'-bis(3,4-dicarboxyphenoxy)biphenyldianhydrid;
stärker bevorzugt das aromatische Dianhydrid ein beliebiges oder eine Kombination von mindestens zwei ausgewählt aus Pyromellitsäuredianhydrid, 3,3',4,4'-Biphenyltetracarbonsäuredianhydrid, 2,2'-Bis(3,4-dicarboxyphenyl) hexafluorpropandianhydrid oder 4,4'-(p-Phenylendioxy)bis[phthalsäureanhydrid] (HQDA) umfasst.

**3.** Polyimidlack nach Anspruch 1 oder 2, wobei, wenn eine Gesamtmasse von all den festen Komponenten in dem Polyimidlack als 100 % angenommen wird, die Masse der durch Epoxidsilan modifizierten Siliciumdioxid-Nanopartikel 5-30 % beträgt.

**4.** Polyimidlack nach einem der Ansprüche 1 bis 3, wobei die mediane Partikelgröße D50 der Siliciumdioxid-Nanopartikel 10 bis 110 nm und stärker bevorzugt 10 bis 80 nm beträgt;

bevorzugt die Siliciumdioxid-Nanopartikel hydrophile Siliciumdioxid-Nanopartikel sind;
bevorzugt, wenn die Masse der Siliciumdioxid-Nanopartikel als 100 % angenommen wird, die Masse des Haftvermittlers von Epoxidsilan 5 bis 15 % beträgt;
bevorzugt der Haftvermittler von Epoxidsilan ein beliebiges oder eine Kombination von mindestens zwei ausgewählt aus durch die folgende Formel I, Formel II oder Formel III dargestellten Verbindungen umfasst,

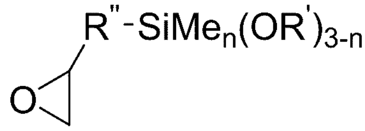

Formel I;

in der Formel I R' ausgewählt ist aus -Me oder -Et, R" ausgewählt ist aus

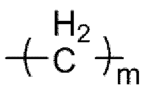,

wobei n = 0, 1 oder 2, m = 1, 2 oder 3;

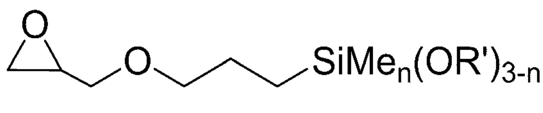

Formel II;

in der Formel II R' ausgewählt ist aus -Me oder -Et, n = 0, 1 oder 2;

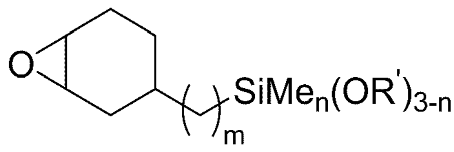

Formel III;

in der Formel III R' ausgewählt ist aus -Me oder -Et, n = 0, 1 oder 2, m = 0, 1 oder 2;
stärker bevorzugt der Haftvermittler von Epoxidsilan ein beliebiges oder eine Kombination von mindestens zwei ausgewählt aus γ-Glycidoxypropyltrimethoxysilan, (3-Aminopropyl)triethoxysilan oder β-(3,4-Epoxycyclohexyl) ethyltrimethoxysilan umfasst.

5. Polyimidlack nach einem der Ansprüche 1 bis 4, wobei die Rohmaterialien zum Herstellen des Polyimidlacks auch ein polares Lösungsmittel umfassen;

bevorzugt das polare Lösungsmittel ein beliebiges oder eine Kombination von mindestens zwei ausgewählt aus N-Methyl-2-pyrrolidon, N,N-Dimethylformamid, N,N-Dimethylacetamid, γ-Butyrolacton, Propylenglycolmonomethylether, Cyclopentanon, Cyclohexanon, Ethylacetat, Toluol oder Methylethylketon umfasst;
stärker bevorzugt das polare Lösungsmittel N,N-Dimethylformamid und/oder N,N-Dimethylacetamid ist;
bevorzugt der Feststoffgehalt in dem Polyimidlack 10-30 Gew.-% beträgt.

6. Leiter mit Polyimidemaillierung, umfassend einen Leiter und eine Polyimidemaillierung außerhalb des Leiters, wobei die Polyimidemaillierung nach Härten des Polyimidlacks nach einem der Ansprüche 1 bis 5 erlangt wird.

7. Leiter mit Polyimidemaillierung nach Anspruch 6, wobei das Härten bei einer Temperatur von nicht weniger als 300 °C durchgeführt wird.

8. Verwendung des Leiters mit Polyimidemaillierung nach Anspruch 6 oder 7 in einem Motor.

9. Motor, umfassend den Leiter mit Polyimidemaillierung nach Anspruch 6 oder 7.

**Revendications**

1. Vernis polyimide, dans lequel les matières premières destinées à préparer le vernis polyimide comprennent du dianhydride aromatique, de la diamine aromatique et des nanoparticules de silice modifiées par époxy silane ;

dans lequel un rapport molaire du dianhydride aromatique à la diamine aromatique est de 0,95 à 1,05,
dans lequel, lorsqu'une masse totale de tous les composants solides dans le vernis polyimide est prise comme étant de 100 %, la masse des nanoparticules de silice modifiées par époxy silane est de 1 à 40 % ;
dans lequel, les matières premières destinées à préparer les nanoparticules de silice modifiées par époxy silane comprennent des nanoparticules de silice et un agent de couplage d'époxy silane ;
dans lequel la taille de particule moyenne D50 des nanoparticules de silice est de 10 à 300 nm, la taille de particule moyenne D50 est la distribution de volume Dv50, déterminée par le procédé de diffraction laser, et le coefficient de variation (C.V.) de taille de particule est égal ou inférieur à 10 % ;
lorsque la masse des nanoparticules de silice est prise comme étant de 100 %, la masse de l'agent de couplage d'époxy silane est de 1 à 20 % ;
dans lequel la diamine aromatique comprend l'un quelconque ou une combinaison d'au moins deux choisis parmi les suivants : p-phénylènediamine, m-phénylènediamine, 4,4'-diaminodiphényléther, 2,2'-bis(trifluorométhyl)-4,4'-biphényldiamine, 4,4'-diaminobenzanilide, 2,2-bis[4-(4-aminophénoxy)phényl]propane, 4,4'-diaminodiphényl sulfone, 2,2-bis(4-hydroxy-3-aminophényl)propane, 4,4'-bis(3-aminophénoxy)diphénylsulfone, 2,2-diméthyl-4,4-diaminobiphényl (m-tolidine), 4,4'-diaminobiphényl (benzidine) ou 9,9-bis(4-aminophényl) fluorène ;
dans lequel le vernis polyimide est préparé par les étapes suivantes :

étape 1, le dianhydride aromatique et la diamine aromatique réagissent dans un solvant polaire de manière à obtenir un acide polyamique ;
étape 2, l'acide polyamique obtenu à l'étape 1 réagit avec les nanoparticules de silice modifiées par époxy silane de manière à obtenir le vernis polyimide.

2. Vernis polyimide selon la revendication 1, dans lequel le dianhydride aromatique comprend l'un quelconque ou une combinaison d'au moins deux choisis parmi les suivants : dianhydride 2,2',3,3'-biphényltétracarboxylique, dianhydride 3,3',4,4'-biphényltétracarboxylique, anhydride 4,4'-oxydiphthalique, dianhydride 9,9-bis(3,4-dicarboxyphényl) fluorène, acide 5-isobenzofurancarboxylique, bis[(3,4-anhydride dicarboxylique)phényl]téréphthalate, dianhydride 3,3',4,4'-diphénylsulfone tétracarboxylique, dianhydride p-phénylène bis(trimellitate), 4,4'-(p-phénylènedioxy)bis [anhydride phthalique] (HQDA), dianhydride pyroméllitique, dianhydride 2,2'-bis(3,4-dicarboxyphényl)hexafluorpropane, dianhydride 2,2-bis(4-(3,4-dicarboxyphénoxy)phényl)hexafluoropropane, dianhydride 2,2-bis(4-(3,4-dicarboxylbenzoyloxy)phényl)hexafluoropropane ou dianhydride 2,2'-bis(trifluorométhyl)-4,4'-bis(3,4-dicarboxyphénoxy) biphényl ;
mieux encore, le dianhydride aromatique comprend l'un quelconque ou une combinaison d'au moins deux choisis parmi le dianhydride pyromellitique, le dianhydride 3,3',4,4'-biphényltétracarboxylique, le dianhydride 2,2'-bis(3,4-dicarboxyphényl)hexafluorpropane ou le 4,4'-(p-phénylènedioxy)bis[anhydride phthalique] (HQDA).

3. Vernis polyimide selon la revendication 1 ou 2, dans lequel, lorsqu'une masse totale de tous les composants solides dans le vernis polyimide est prise comme étant de 100 %, la masse des nanoparticules de silice modifiées par époxy silane est de 5 à 30 %.

4. Vernis polyimide selon l'une quelconque des revendications 1 à 3, dans lequel la taille de particule moyenne D50 des nanoparticules de silice est de 10 à 110 nm, et mieux encore de 10 à 80 nm ;

de préférence, les nanoparticules de silice sont des nanoparticules de silice hydrophiles ;
de préférence, lorsque la masse des nanoparticules de silice est prise comme étant de 100 %, la masse de l'agent de couplage d'époxy silane est de 5 à 15 % ;
de préférence, l'agent de couplage d'époxy silane comprend l'un quelconque ou une combinaison d'au moins deux choisis parmi des composés tels que représentés par la formule I, la formule II ou la formule III suivantes,

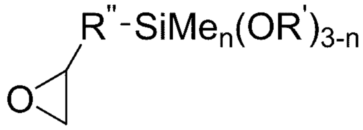

Formule I ;

dans la formule I, R' est choisi parmi -Me ou -Et, R" est choisi parmi

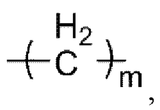

dans lequel n = 0, 1 ou 2, m = 1, 2 ou 3 ;

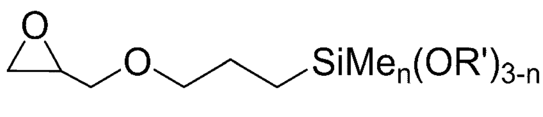

Formule II ;

dans la formule II, R' est choisi parmi -Me ou -Et, n = 0, 1 ou 2 ;

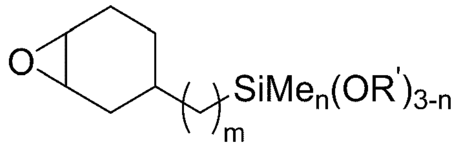

Formule III ;

dans la formule III, R' est choisi parmi -Me ou -Et, n = 0, 1 ou 2, m = 0, 1 ou 2 ;
mieux encore, l'agent de couplage d'époxy silane comprend l'un quelconque ou une combinaison d'au moins deux choisis parmi l'γ-glycidoxypropyltriméthoxysilane, le (3-aminopropyl)triéthoxysilane ou le β-(3,4-époxycyclohexyl) éthyl triméthoxy silane.

**5.** Vernis polyimide selon l'une quelconque des revendications 1 à 4, dans lequel les matières premières destinées à préparer le vernis polyimide comprennent également un solvant polaire ;

de préférence, le solvant polaire comprend l'un quelconque ou une combinaison d'au moins deux choisis parmi le N-méthyl-2-pyrrolidone, le N,N-diméthylformamide, le N,N-diméthylacétamide, l'γ-butyrolactone, l'éther monométhylique de propylène glycol, le cyclopentanone, le cyclohexanone, l'acétate d'éthyle, le toluène ou le méthyléthylcétone ;
mieux encore, le solvant polaire est le N,N-diméthylformamide et/ou le N,N-diméthylacétamide ;
de préférence, la teneur en solides dans le vernis polyimide est de 10 à 30 % en poids.

**6.** Conducteur avec émail polyimide, comprenant un conducteur, et un émail polyimide à l'extérieur du conducteur, dans lequel l'émail polyimide est obtenu après le durcissement du vernis polyimide selon l'une quelconque des revendications 1 à 5.

**7.** Conducteur avec émail polyimide selon la revendication 6, dans lequel le durcissement est effectué à une température non inférieure à 300 °C.

**8.** Utilisation du conducteur avec émail polyimide selon la revendication 6 ou 7 dans un moteur.

**9.** Moteur, comprenant le conducteur avec émail polyimide selon la revendication 6 ou 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 112063294 A
- CN 111808306 A
- CN 112011074 A
- CN 106589374 A
- CN 114933852 A
- GB T40742183 A
- GB T407421 A
- GB T4074212018 A


### Non-patent literature cited in the description


- *High Performance Polymers*, 2017, vol. 29 (9), 1049-1057
- *Polymer*, 2005, vol. 46, 6959-6967